# EUROPÄISCHE PATENTSCHRIFT

(11) **EP 1 316 195 B1**
(45) Veröffentlichungstag und Bekanntmachung des Hinweises auf die Patenterteilung: **23.11.2005**
(21) Anmeldenummer: 01978088.1
(22) Anmeldetag: 03.09.2001
(51) Int. Cl.: H04M 1/82, H04M 3/22

(54) **VERFAHREN ZUM ABGLEICHEN DER BELEGUNGSZUSTÄNDE ZWISCHEN EINEM ENDGERÄT UND EINER VERMITTLUNGSEINRICHTUNG SOWIE VERMITTLUNGSEINRICHTUNG UND ÜBERWACHUNGSPROGRAMM**
METHOD FOR MATCHING THE OCCUPANCY STATES BETWEEN A TERMINAL AND A SWITCHING FACILITY, AND A CORRESPONDING SWITCHING FACILITY AND MONITORING PROGRAM
PROCEDE POUR EQUILIBRER LES ETATS D'OCCUPATION ENTRE UN TERMINAL ET UN CENTRAL, ET CENTRAL ET PROGRAMME DE SURVEILLANCE CORRESPONDANTS

(30) Priorität: 08.09.2000 DE 10044434
(43) Veröffentlichungstag der Anmeldung: 04.06.2003
(73) Patentinhaber: SIEMENS AKTIENGESELLSCHAFT, 80333 München (DE)
(72) Erfinder: PLARRE, Thomas, 83607 Holzkirchen (DE)
(86) Internationale Anmeldenummer: PCT/DE2001/003372
(87) Internationale Veröffentlichungsnummer: WO 2002/021810

(56) Entgegenhaltungen:
- US-A- 4 817 137
- US-A- 5 570 418
- US-A- 5 742 671

## Beschreibung

Die Erfindung betrifft ein Verfahren, bei dem eine Vermittlungseinrichtung ein Kommunikationsnetz und/oder ein Datenübertragungsnetz mit mindestens einem Endgerät verbindet, dem Aufgaben von der Vermittlungseinrichtung übergeben werden. Das Endgerät bearbeitet aber auch Aufgaben, die von einer anderen Stelle als der Vermittlungseinrichtung kommen, z.B. von einer Bedienperson oder aus einem lokalen Datenübertragungsnetz. Das Endgerät kann nur eine vorgegebene Anzahl von Aufgaben gleichzeitig erledigen, z.B. nur eine Aufgabe. Beim Erreichen und Unterschreiten der vorgegebenen Anzahl tritt eine Änderung des Belegungszustandes des Gerätes auf. Beispielsweise gibt es die Belegungszustände "frei" und "besetzt". Bei einer Änderung des Belegungszustandes werden Maßnahmen zum Vermerken der Änderung in der Vermittlungseinrichtung und/oder im Endgerät eingeleitet. Die fehlerfreie Ausführung dieser Maßnahmen wird automatisch überwacht.

Die Vermittlungseinrichtung ist beispielsweise eine Telekommunikationsanlage, die zum Vermitteln von Verbindungen innerhalb des Geländes einer Behörde oder eines Unternehmens dient. Beispielsweise werden Telekommunikationsanlagen des Typs HICOM der Firma Siemens AG eingesetzt. Als Vermittlungseinrichtung wird jedoch auch eine Vermittlungsstelle des öffentlichen Telefonnetzes eingesetzt, z.B. eine Vermittlungsstelle vom Typ EWSD der Firma Siemens. Insbesondere werden Vermittlungsstellen eingesetzt, die Funktionen einer Telekommunikationsanlage übernehmen. Das Endgerät ist z.B. ein Rechner mit einer ISDN-Karte (Integrated Services Digital Network) und gegebenenfalls auch mit einer Netzwerkkarte, über die der Rechner mit einem lokalen Datennetz verbunden ist. Eingesetzt werden aber auch digitale Telefone, die mit der Telekommunikationsanlage, nicht jedoch mit einem Datenübertragungsnetz verbunden sind. Das Kommunikationsnetz ist beispielsweise das öffentliche Telefonnetz oder ein Mobilfunknetz. Das Datenübertragungsnetz ist beispielsweise das Internet oder ein lokales Datennetz.

Es ist bekannt, in der Vermittlungseinrichtung zur Überwachung der Belegungszustände sogenannte Audits nach festen Zeitabständen durchzuführen, z.B. alle 15 Minuten. Bei der Durchführung des Audits werden dann die Belegungszustände aller Endgeräte abgefragt und mit den in der Vermittlungseinrichtung vermerkten Belegungszuständen verglichen und gegebenenfalls korrigiert. Mit dem Audit lassen sich Abweichungen der Belegungszustände jedoch nicht hinreichend schnell beseitigen.

Verfahren zum Erkennen von Zuständen in Telekommunikationsendgeräten finden sich zum Beispiel in US-A-5 570 418, welches ein Verfahren beschreibt, bei dem eine Vermittlungsstelle nur von einer Telefontastatur erzeugte Signale erkennt, in US-A-4 817 137, das ein Gerät zum Fernabfragen des Zustandes eines Telefons durch Messung von Spannungsänderungen und Testsignalen zeigt oder in US-A-5 742 671, das ein Verfahren zur Überwachung mehrerer Telefonleitungen offenbart.

Es ist Aufgabe der Erfindung, zum Abgleichen von Belegungszuständen ein einfaches Verfahren anzugeben, das eine schnelle Korrektur ermöglicht. Außerdem sollen eine zugehörige Vermittlungseinrichtung und ein zugehöriges Überwachungsprogramm angegeben werden. Die auf das Verfahren bezogene Aufgabe wird durch die im Patentanspruch 1 angegebenen Verfahrensschritte gelöst. Weiterbildungen sind in den Unteransprüchen angegeben.

Die Erfindung geht von der Überlegung aus, dass für die Prüfung aller angeschlossenen Endgeräte eine erhebliche Rechenzeit in der Vermittlungseinrichtung erforderlich ist. Aufgrund dieser Rechenzeit kann die Zeit zwischen zwei aufeinanderfolgenden Prüfungen bezüglich eines Endgerätes nicht beliebig verkürzt werden, selbst wenn man die Prüfung zwischenzeitlich unterbrechen würde. Wird dagegen die Prüfung von den Endgeräten selbst durchgeführt, so wird die Vermittlungseinrichtung durch die Prüfung wesentlich weniger belastet. In den Endgeräten steht außerdem ausreichend Rechenzeit zur Verfügung. Deshalb wird beim erfindungsgemäßen Verfahren die Überwachung im Endgerät ausgeführt. Durch diese Maßnahme wird

erreicht, dass sich die Zeit zwischen der Überprüfung eines Endgerätes und der nächsten Überprüfung dieses Endgerätes erheblich verkürzen lässt, ohne dabei die Vermittlungseinrichtung zu blockieren.

Abweichungen der Belegungszustände zwischen dem Endgerät und der Vermittlungseinrichtung lassen sich so feststellen und auch schneller korrigieren. Die Zeit, in der ein belegbares Endgerät bei einer Belegungsanforderung für ein Endgerät in der Vermittlungseinrichtung nicht belegt wird, verkürzt sich.

Bei einer Weiterbildung wird die Überwachung abhängig von einem Unterschreiten der vorgegebenen Anzahl gestartet. Als Startzeitpunkt für das Überwachungsverfahren wird also nicht ein vorgegebener Zeitabschnitt verwendet, sondern das Freiwerden des Endgerätes. Dies hat den Vorteil, dass die Überprüfung der Belegungszustände zu einem Zeitpunkt ausgeführt wird, zu dem das Endgerät nicht belegt ist. Somit kann das Endgerät seine eigentlichen Aufgaben ungestört von der Überwachung erledigen. Weil der Zustand des Endgerätes zu Beginn des Überwachungsverfahrens bekannt ist, vereinfacht sich die Überwachung.

Bei einer nächsten Weiterbildung verteilt die Vermittlungseinrichtung unter einer Rufnummer ankommende Rufe bzw. unter einer Adresse ankommende Nachrichten an eines von mehreren Endgeräten, z.B. zyklisch. Die Vermittlungseinrichtung und die Endgeräte bilden somit ein Verteilsystem. Solche Verteilsysteme werden beispielsweise als Call-Center bezeichnet. Bei Verteilsystemen ist es besonders wichtig, dass keine belegbaren Endgeräte unbelegt bleiben, weil die Anzahl der bearbeiteten Aufgaben bzw. Anforderungen sonst spürbar zurückgeht. Dies gilt insbesondere in Spitzenzeiten, in denen alle Endgeräte belegt sind. Bleibt bei fünf angeschlossenen Endgeräten beispielsweise ein Endgerät unbelegt, obwohl es eigentlich belegt werden könnte, so verringert sich die Anzahl der durch das Verteilsystem bearbeiteten Aufgaben um 20 Prozent.

Bei einer nächsten Weiterbildung wird zu Beginn der Überwachung im Rahmen einer Kurzzeitüberwachung eine erste Zeitperiode gestartet. Die Zeitperiode beträgt mehrere Sekunden, z.B. drei Sekunden. Bei einer Belegung des Endgerätes während der ersten Zeitperiode wird die Überwachung abgebrochen. Erst bei Ablauf der ersten Zeitperiode werden weitere Schritte im Rahmen der Überwachung ausgeführt. Zu diesen Schritten gehört beispielsweise die Fehlerbehandlung. Durch diese Maßnahme wird erreicht, dass die Überwachung erst dann durchgeführt wird, wenn sichergestellt ist, dass keine Spitzenzeit vorliegt. In einer Spitzenzeit wird das Endgerät nämlich vor Ablauf der ersten Zeitperiode wieder belegt. Durch die Belegung ist außerdem sichergestellt, dass das Endgerät nicht ungenutzt bleibt. Eine Überwachung ist also bei einer Belegung innerhalb der ersten Zeitperiode überflüssig. Dies gilt sowohl für eine von der Vermittlungseinrichtung ausgehende Belegung als auch für eine von einer anderen Stelle ausgehende Belegung, z.B. von einer durch die Bedienperson des Endgerätes veranlassten Belegung.

Bei einer nächsten Weiterbildung wird nach Ablauf der ersten Zeitperiode der in der Vermittlungseinrichtung vermerkte Belegungszustand zum Endgerät übermittelt. Dies erfolgt vorzugsweise auf eine Anfrage des Endgerätes an die Vermittlungseinrichtung. Der von der Vermittlungseinrichtung übermittelte Zustand wird überprüft, indem beispielsweise ein im Endgerät vermerkter Belegungszustand mit dem übermittelten Belegungszustand verglichen wird. Bei einer Abweichung des übermittelten Belegungszustandes vom Belegungszustand des Endgerätes werden weitere Schritte im Rahmen der Überwachung ausgeführt. Bei Übereinstimmung von übermitteltem Belegungszustand und Belegungszustand des Endgerätes wird die Überwachung abgebrochen. Alternativ lassen sich jedoch auch weitere Schritte im Rahmen der Überwachung ausführen. So wird von einer Kurzzeitüberwachung auf eine Langzeitüberwachung umgeschaltet. Die Vermittlungseinrichtung wird beim Übermitteln des Belegungszustandes nur unwesentlich belastet, weil lediglich eine entsprechende Nachricht beantwortet werden muss. Das Prüfen des Belegungszustandes erfolgt auf der Seite des Endgerätes.

Bei einer Ausgestaltung wird bei einer Abweichung des übermittelten Belegungszustandes vom Belegungszustand des Endgerätes eine Fehlerbehandlung gestartet. Alternativ wird jedoch ebenfalls im Rahmen der Kurzzeitüberwachung mindestens eine zweite Zeitperiode gestartet, die vorzugsweise im Sekundenbereich liegt. Bei einer Belegung des Endgerätes während der zweiten Zeitperiode wird die Überwachung abgebrochen. Bei Ablauf der letzten der zweiten Zeitperioden wird die Fehlerbehandlung ausgeführt. Durch die Ausgestaltung lassen sich Verzögerungszeiten beim Ändern der Belegungszustände in der Vermittlungseinrichtung berücksichtigen. Obwohl ein abweichender, d.h. falscher, Belegungszustand von der Vermittlungseinrichtung übermittelt wurde, ist es möglich, dass zwischenzeitlich in der Vermittlungseinrichtung ein richtiger Belegungszustand vermerkt worden ist. Belegt die Vermittlungseinrichtung aufgrund des richtigen Belegungszustandes, d.h. des Belegungszustandes "frei", das Endgerät erneut, so wird die Fehlerbehandlung abgebrochen.

Bei einer weiteren Ausgestaltung wird nach dem Ablauf einer zweiten Zeitperiode, die nicht die letzte zweite Zeitperiode ist, der in der Vermittlungseinrichtung vermerkte Belegungszustand erneut zum Endgerät übermittelt. Der übermittelte Belegungszustand wird wiederum geprüft. Abhängig vom Prüfergebnis werden die oben bereits erwähnten, auf das Prüfergebnis bezogenen Verfahrensschritte ausgeführt. Durch diese Maßnahme lässt sich sicherstellen, dass Verzögerungszeiten in der Vermittlungseinrichtung auch dann berücksichtigt werden, wenn durch die Vermittlungseinrichtung nicht sofort eine erneute Belegung erfolgt. Bei der zweiten oder dritten Abfrage des Belegungszustandes in der Vermittlungseinrichtung kann der Vermerk für den Belegungszustand nämlich bereits aktualisiert worden sein. Unnötige Maßnahmen zur Fehlerbehandlung lassen sich in diesem Fall vermeiden.

Bei einer nächsten Weiterbildung wird bei Übereinstimmung von übermitteltem Belegungszustand und Belegungszustand des Endgerätes im Rahmen einer Langzeitüberwachung eine dritte Zeitperiode gestartet, die länger als die erste Zeitperiode ist und vorzugsweise im Minutenbereich liegt. Bei einer Belegung des Endgerätes während der dritten Zeitperiode wird die Überwachung abgebrochen. Bei Ablauf der dritten Zeitperiode wird der in der Vermittlungseinrichtung vermerkte Belegungszustand zum Endgerät übermittelt. Der übermittelte Belegungszustand wird geprüft. Abhängig vom Prüfergebnis werden die oben erläuterten Verfahrensschritte, die auf das Prüfergebnis bezogen sind, ausgeführt. Insbesondere wird also beim Feststellen einer Abweichung zwischen den Belegungszuständen von der Langzeitüberwachung zur Kurzzeitüberwachung übergegangen. Während der Langzeitüberwachung werden pro Zeiteinheit weniger Meldungen zwischen Endgerät und Vermittlungseinrichtung als während der Kurzzeitüberwachung ausgetauscht.

Bei einer anderen Weiterbildung werden im Rahmen der Fehlerbehandlung die Maßnahmen zum Vermerken der Änderung in der Vermittlungseinrichtung wiederholt. Beispielsweise werden vom Endgerät aus erneut Nachrichten zur Änderung des Status gesendet. Alternativ lässt sich der Belegungszustand des Endgerätes dem in der Vermittlungseinrichtung vermerkten Belegungszustand angleichen. Dazu lässt sich der von der Vermittlungseinrichtung im Rahmen der Überwachung übermittelte Belegungszustand verwenden.

Die Erfindung betrifft außerdem ein Endgerät, das zur Ausführung des erfindungsgemäßen Verfahrens oder einer seiner Weiterbildungen geeignet ist. Somit gelten die oben für das Verfahren genannten Wirkungen auch für das Endgerät. Insbesondere wird die Überwachung im Endgerät abhängig von dem Unterschreiten der vorgegebenen Anzahl von gleichzeitig auszuführenden Aufgaben gestartet.

Weiterhin betrifft die Erfindung ein Überwachungsprogramm, das eine Befehlsfolge enthält, bei deren Ausführung durch einen Prozessor die auf die Überwachung bezogenen Verfahrensschritte nach dem erfindungsgemäßen Verfahren oder einer seiner Weiterbildungen ausgeführt werden. Die oben genannten technischen Wirkungen gelten demzufolge auch für das Überwachungsprogramm.

Im Folgenden werden Ausführungsbeispiele der Erfindung an Hand der beiliegenden Figuren erläutert. Darin zeigen:
- Figur 1: ein Aufgabenverteilsystem,
- Figuren 2A bis 2C: Szenarien zum Abgleich von Belegungszuständen in einem Endgerät und einer Telekommunikationsanlage,
- Figuren 3A und 3B: Verfahrensschritte beim Ausführen eines Überwachungsprogramms in dem Endgerät, und
- Figuren 4A bis 4D: Szenarien zum Überwachen der Belegungszustände in dem Endgerät und der Telekommunikationsanlage.

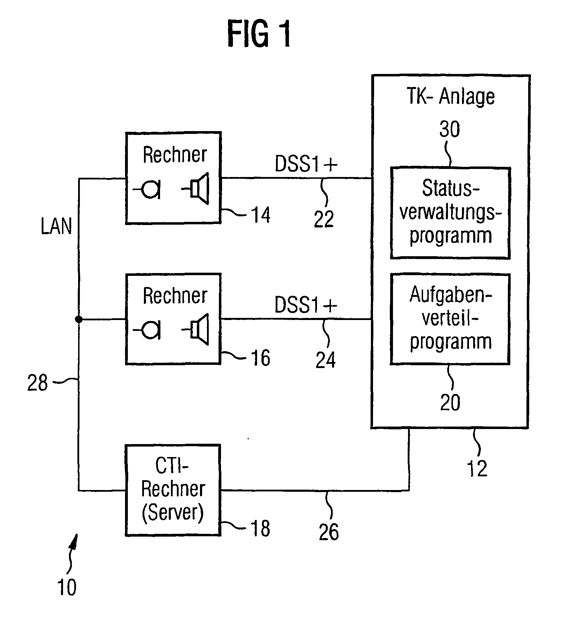

Figur 1 zeigt ein Aufgabenverteilsystem 10, das eine Telekommunikationsanlage 12, Endgeräte 14 und 16 sowie einen Diensterbringungsrechner 18 enthält. Die Funktionen der Telekommunikationsanlage 12 werden durch eine Vermittlungsstelle vom Typ EWSD der Firma Siemens AG erbracht. Die Telekommunikationsanlage enthält Funktionen zur Verteilung von Aufgaben. Diese Funktionen werden durch ein Aufgabenverteilprogramm 20 erbracht. Die Telekommunikationsanlage 12 ist einerseits mit dem öffentlichen Telefonnetz und dem Internet verbunden. Andererseits gibt es Verbindungsleitungen 22 bzw. 24 zum Endgerät 14 bzw. 16. Auf den Verbindungsleitungen 22 und 24 wird beispielsweise gemäß einem firmeneigenen Protokoll des Herstellers der Telekommunikationsanlage 12 signalisiert. Dieses Protokoll kann an das standardisierte Protokoll zur Teilnehmersignalisierung DSS1 (Digital Signalling System One) angelehnt.

Das Aufgabenverteilprogramm 20 nimmt aus dem Telekommunikationsnetz kommende Anrufe entgegen und verteilt diese an eines der Endgeräte 14 und 16. Aus dem Internet kommende IP-Rufe (Internetprotokoll) und E-Mails werden ebenfalls zu den Endgeräten 14, 16 übertragen. Dabei werden der mit Hilfe einer Verbindungsleitung 26 angeschlossene Diensterbringungsrechner 18 und ein lokales Datenübertragungsnetz 28 einbezogen.

Das Aufgabenverteilprogramm 20 verteilt jedoch nur solche Aufgaben, die unter einer vorbestimmten Rufnummer oder unter einer vorbestimmten Internetadresse bei der Telekommunikationsanlage 12 eintreffen. Die Aufgaben können nur an solche Endgeräte 14 und 16 verteilt werden, die zur Zeit nicht belegt sind. Mit Hilfe eines Statusverwaltungsprogramms 30 können freie Endgeräte 14 und 16 von der Telekommunikationsanlage 12 aus ermittelt werden.

Die Endgeräte 14 und 16 sind Rechner und haben jeweils einen Lautsprecher und ein Mikrofon sowie eine Einheit zur Sprachverarbeitung. Beide Endgeräte 14 und 16 sind an das lokale Datenübertragungsnetz 28 angeschlossen. Die Endgeräte 14 und 16 werden auch als sogenannte Agentenarbeitsplätze bezeichnet. Dies gilt insbesondere dann, wenn die Endgeräte 14 und 16 im Rahmen der Aufgabenverteilung eingesetzt werden. Die Aufgabenverteilung lässt sich gemäß internationaler Standards durchführen. So wird zur Rufverteilung ein Verfahren eingesetzt, das den Standard CSTA (Services for Computer Supported Telecommunications Applications) Phase III der ECMA (European Computer Manufacturer Association) erfüllt.

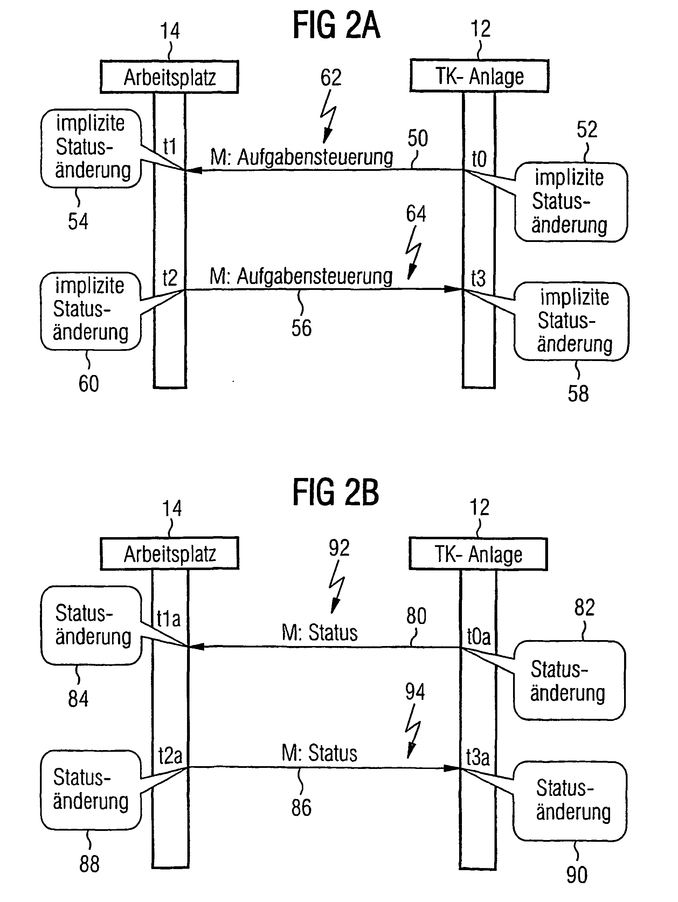

Die Figuren 2A bis 2C zeigen Szenarien zum Abgleich von Belegungszuständen zwischen dem Endgerät 14 und der Telekommunikationsanlage 12. Änderungen der Belegungszustände erfolgen sowohl ausgehend vom Endgerät 14 als auch von der Telekommunikationsanlage 12. Deshalb ist eine Synchronisation des Belegungszustandes erforderlich. Auf der Seite der Telekommunikationsanlage 12 wird das in Figur 1 gezeigte Statusverwaltungsprogramm 30 zur Synchronisation des Belegungszustandes herangezogen.

Die Figur 2A zeigt eine implizite Änderung der Belegungszustände durch den Austausch von Meldungen M. Es sei angenommen, dass die Telekommunikationsanlage 12 zu einem Zeitpunkt t0 eine Meldung 50 an das Endgerät 14 überträgt. Beispielsweise wird durch die Meldung 50 ein angekommener Ruf an das Endgerät 14 weiter signalisiert. Die Meldung 50 trifft zu einem Zeitpunkt t1 am Endgerät 14 ein. In der Telekommunikationsanlage 12 wird der dort vermerkte Belegungszustand des Endgerätes 14 beim Senden der Meldung 50 automatisch auf den Zustand"belegt" geändert, siehe Rahmen 52. Beim Empfang der Meldung 50 im Endgerät 14 wird auch im Endgerät 14 der vermerkte und der tatsächliche Belegungszustand des Endgerätes 14 automatisch auf den Zustand "belegt" geändert, weil dies bei der Bearbeitung einer Rufanforderung zwingend ist, siehe Rahmen 54.

Andererseits wird eine implizite Änderung von Belegungszuständen auch durchgeführt, wenn das Endgerät 14 im Rahmen der Aufgabensteuerung eine Meldung 56 zu einem Zeitpunkt t2 an die Telekommunikationsanlage 12 sendet. Beispielsweise enthält die Meldung 56 eine Rufaufbauanforderung, weil der das Endgerät 14 bedienende Teilnehmer einen Ruf aufbauen möchte. Die Meldung 56 trifft zu einem Zeitpunkt t3 in der Telekommunikationsanlage 12 ein. Aufgrund der Meldung 56 wird in der Telekommunikationsanlage 12 automatisch der Belegungszustand des Endgerätes als "belegt" gekennzeichnet, weil das Endgerät 14 nur einen Ruf aufbauen kann, siehe Rahmen 58. Im Endgerät 14 wird beim Senden der Meldung 56 ebenfalls der Belegungszustand als "belegt" vermerkt, siehe Rahmen 60.

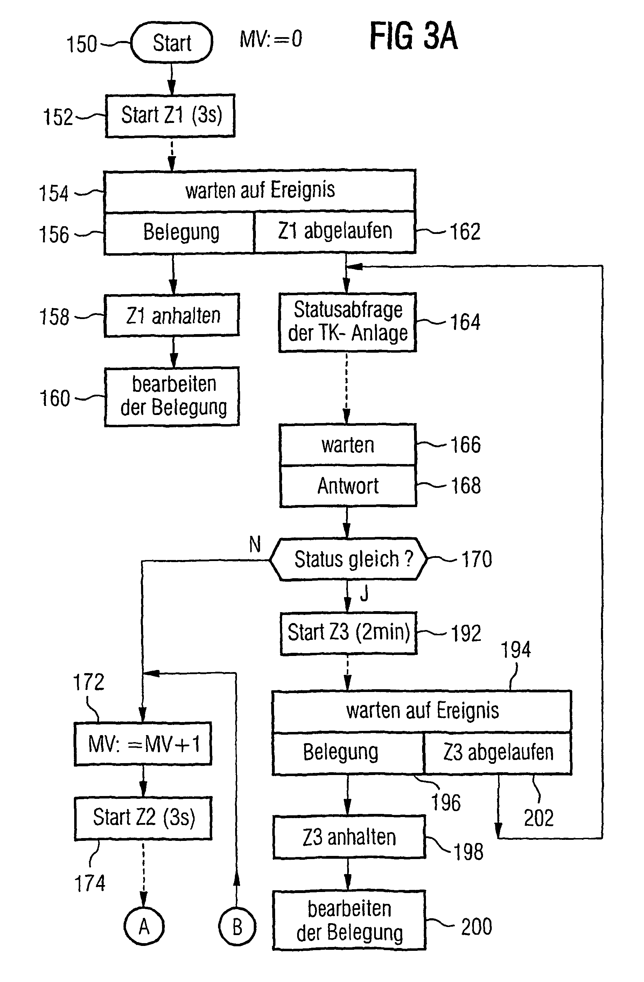

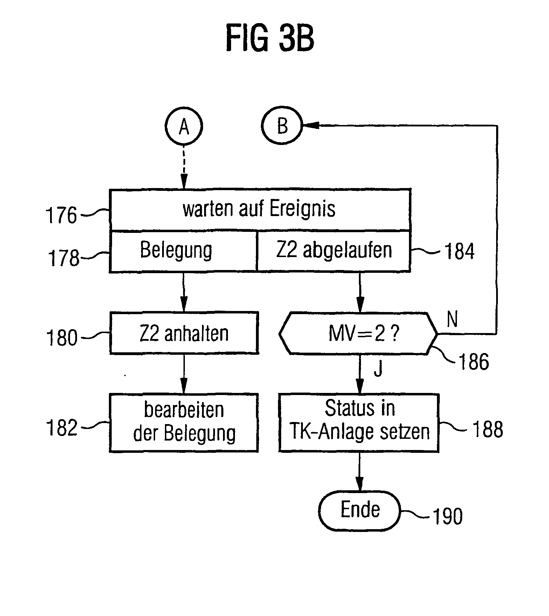

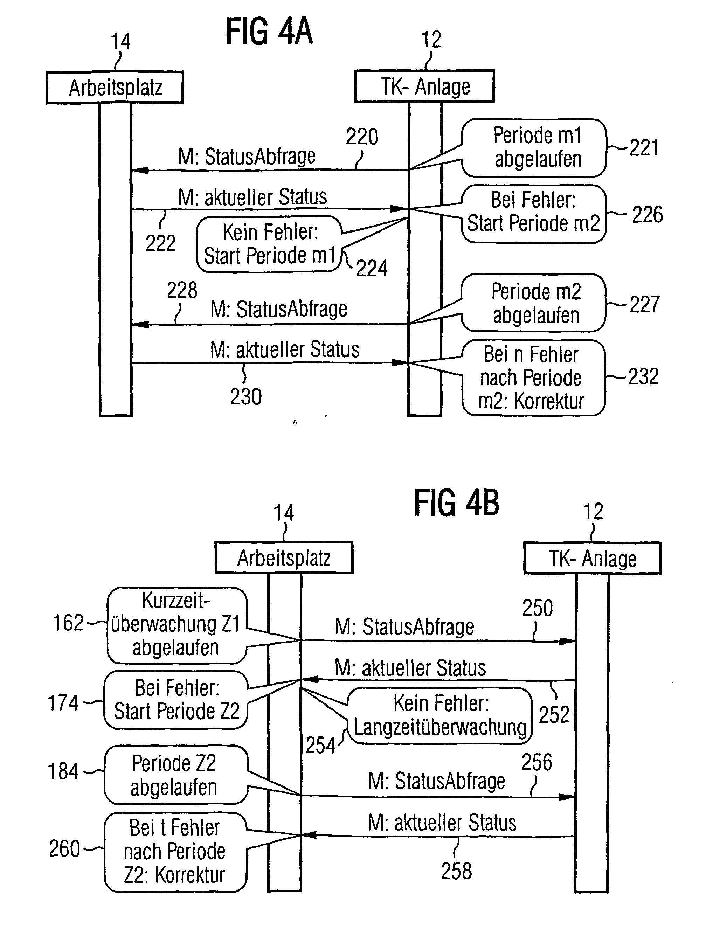

Wird die Übertragung der Meldung 50 oder die Übertragung der Meldung 56 gestört, siehe Störpfeile 62 und 64, so kommt es zu einer Abweichung der im Endgerät 14 und in der Telekommunikationsanlage 12 vermerkten Belegungszustände für das Endgerät 14. Zum Korrigieren solcher Abweichungen werden die unten an Hand der Figuren 3A, 3B und 4A bis 4D erläuterten Verfahren ausgeführt.

Die Figur 2B zeigt die explizite Änderung von Belegungszuständen durch den Austausch ungesicherter Meldungen M. Zu einem Zeitpunkt t0a wird von der Telekommunikationsanlage 12 eine ungesicherte Statusmeldung 80 zum Endgerät 14 gesendet. Die Statusmeldung 80 enthält eine Anforderung zum Ändern des Belegungszustandes auf den Zustand "frei" oder auf den Zustand "belegt". Die Statusmeldung 80 trifft zu einem Zeitpunkt t1a im Endgerät 14 ein. Beim Absenden der Statusmeldung 80 wird in der Telekommunikationsanlage der neue Belegungszustand vermerkt, siehe Rahmen 82. Nach dem Empfang der Statusmeldung 80 im Endgerät 14 wird auch im Endgerät 14 der neue Belegungszustand vermerkt, siehe Rahmen 84.

Andererseits werden auch vom Endgerät 14 zur Telekommunikationsanlage 12 ungesicherte Meldungen M zur Statusänderung übertragen, siehe eine zu einem Zeitpunkt t2a übertragene Statusmeldung 86. Die Statusmeldung 86 wird zu einem Zeitpunkt t3a in der Telekommunikationsanlage 12 empfangen. Beim Senden der Statusmeldung 86 wird im Endgerät 14 der neue Belegungszustand vermerkt, siehe Rahmen 88. Nach dem Empfang der Statusmeldung 86 in der Telekommunikationsanlage 12 wird auch in der Telekommunikationsanlage 12 der neue Status gemäß Statusmeldung 86 vermerkt, siehe Rahmen 90.

Kommt es beim Übertragen der Statusmeldungen 80 oder 86 zu Störungen, siehe Störpfeile 92 und 94, so sind Abweichungen in den vermerkten Belegungszuständen im Endgerät 14 bzw. in der Telekommunikationsanlage 12 die Folge. Diese Abweichungen führen zur eingeschränkten Nutzung des Endgerätes 14. Zur Beseitigung dieser Abweichungen werden die unten an Hand der Figuren 3A, 3B und 4A bis 4D erläuterten Verfahrensschritte ausgeführt.

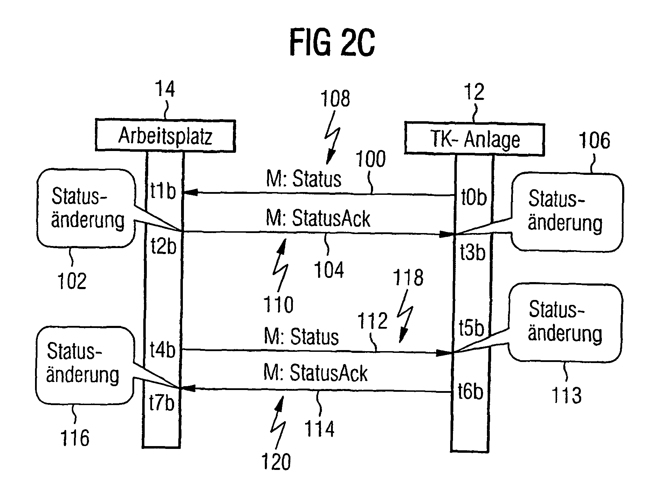

Die Figur 2C zeigt durch den Austausch gesicherter Meldungen M hervorgerufene explizite Änderungen der Belegungszustände. Zu einem Zeitpunkt t0b sendet die Telekommunikationsanlage 12 eine Statusmeldung 100 an das Endgerät 14. Die Statusmeldung 100 wird im Endgerät 14 zu einem Zeitpunkt t1b empfangen. In der Statusmeldung 100 ist als neuer Belegungszustand beispielsweise der Zustand "frei" vermerkt. Bei der Bearbeitung der Statusmeldung 100 im Endgerät 14 wird der im Endgerät 14 vermerkte Belegungszustand auf einen Wert für den Zustand "frei" gesetzt, siehe Rahmen 102. Weil die Statusmeldung 100 eine Bestätigungsmeldung erfordert, wird die zugehörige Bestätigungsmeldung 104 zu einem Zeitpunkt t2b vom Endgerät 14 zur Telekommunikationsanlage 12 gesendet. Die Bestätigungsmeldung 104 trifft zu einem Zeitpunkt t3b in der Telekommunikationsanlage 12 ein. Erst nach dem Zeitpunkt t3b wird der Belegungszustand des Endgerätes 14 als "frei" in der Telekommunikationsanlage 12 vermerkt, siehe Rahmen 106. Durch diese Vorgehensweise ist gewährleistet, dass in der Telekommunikationsanlage 12 der vermerkte Belegungszustand des Endgerätes 14 erst dann geändert wird, wenn feststeht, dass das Endgerät 14 auch die Statusmeldung 100 empfangen hat. Treten jedoch Störungen auf, siehe Störpfeile 108 und 110, so kann es dennoch zu Abweichungen der Belegungszustände kommen.

Sendet andererseits das Endgerät 14 zu einem Zeitpunkt t4b eine Statusmeldung 112 aus, die eine Bestätigung erfordert, so werden ähnliche Schritte ausgeführt. Die Statusmeldung 112 trifft zu einem Zeitpunkt t5b in der Telekommunikationsanlage 12 ein. Beim Bearbeiten der Statusmeldung 112 wird der Belegungszustand des Endgerätes 14 in der Telekommunikationsanlage 12 neu vermerkt, siehe Rahmen 113. Anschließend sendet die Telekommunikationsanlage 12 zu einem Zeitpunkt t6b im Rahmen der Bearbeitung der Statusmeldung 112 eine Bestätigungsmeldung 114 an das Endgerät 14. Die Bestätigungsmeldung 114 trifft zu einem Zeitpunkt t7b beim Endgerät 14 ein. Aufgrund der Bestätigungsmeldung 114 wird der Belegungszustand im Endgerät 14 neu vermerkt, siehe Rahmen 116. Störungen bei der Übertragung der Statusmeldung 112 oder der Bestätigungsmeldung 114, siehe Störpfeile 118 und 120, führen zu Abweichungen der vermerkten Belegungszustände im Endgerät 14 und der Telekommunikationsanlage 12. Die durch die Störungen hervorgerufenen Abweichungen werden mit den unten an Hand der Figuren 3A, 3B und 4A bis 4C erläuterten Verfahren beseitigt.

Die Figuren 3A und 3B zeigen Verfahrensschritte beim Ausführen eines Überwachungsprogramms im Endgerät 14, siehe Figur 1. Das Verfahren beginnt in einem Verfahrensschritt 150 mit dem Freiwerden des Endgerätes 14. Eine Merkvariable MV hat zu Beginn des Verfahrens den Wert Null.

In einem folgenden Verfahrensschritt 152 wird im Rahmen einer Kurzzeitüberwachung ein Timer Z1 gestartet, der nach drei Sekunden abläuft, falls er nicht unterbrochen wird. In einem Verfahrensschritt 154 wartet das Überwachungsprogramm auf ein Ereignis. Tritt während des Wartens in einem Verfahrensschritt 156 eine Belegung des Endgerätes 14 auf, wird der Timer Z1 in einem Verfahrensschritt 158 angehalten. In einem Verfahrensschritt 160 wird die Belegung des Endgerätes bearbeitet. Die Überwachung wird erst nach Abschluss der Bearbeitung der Belegung, d.h. beim Freiwerden des Endgerätes, erneut gestartet.

Tritt dagegen beim Warten auf das Ereignis in einem Verfahrensschritt 154 ein Ereignis auf, das das Ablaufen des Timers Z1 mitteilt, so folgt nach dem Verfahrensschritt 154 ein Verfahrensschritt 162. Beispielsweise wird beim Ablaufen des Timers Z1 eine Unterbrechung ausgelöst, die das Ereignis "Z1 abgelaufen" hervorruft.

Dem Verfahrensschritt 162 folgt ein Verfahrensschritt 164, in welchem vom Endgerät 14 an die Telekommunikationsanlage 12 eine Anfrage zur Statusabfrage gestellt wird. Anschließend wartet das Überwachungsprogramm in einem Verfahrensschritt 166 auf die Antwort der Telekommunikationsanlage 12. Diese Antwort trifft in einem Verfahrensschritt 168 ein.

In einem folgenden Verfahrensschritt 170 prüft das Endgerät 14, ob der in der Antwort enthaltene Belegungszustand mit dem für das Endgerät 14 vermerkten Belegungszustand übereinstimmt. Weichen die Belegungszustände voneinander ab, so folgt nach dem Verfahrensschritt 170 ein Verfahrensschritt 172, in welchem die Merkvariable MV um den Wert Eins erhöht wird. In einem folgenden Verfahrensschritt 174 wird ebenfalls im Rahmen der Kurzzeitüberwachung ein Timer Z2 gestartet. Der Timer Z2 läuft ebenfalls nach drei Sekunden ab.

In einem Verfahrensschritt 176 wartet das Überwachungsprogramm auf das Eintreffen eines Ereignisses. Tritt während des Wartens eine Belegung des Endgerätes 14 in einem Verfahrensschritt 178 auf, bevor der Timer Z2 abgelaufen ist, so folgt ein Verfahrensschritt 180, in welchem der Timer Z2 angehalten wird. Anschließend wird in einem Verfahrensschritt 182 die Belegung bearbeitet. Erst nach dem Bearbeiten der Belegung, d.h. beim Freiwerden des Endgerätes 14, wird das Überwachungsprogramm erneut gestartet, siehe Verfahrensschritt 150.

Tritt dagegen im Verfahrensschritt 176 während des Wartens auf ein Ereignis ein Ereignis auf, das den Ablauf des Timers Z2 mitteilt, siehe Verfahrensschritt 184, so folgt nach dem Verfahrensschritt 184 ein Verfahrensschritt 186. Im Verfahrensschritt 186 wird geprüft, ob die Merkvariable MV bereits den Wert Zwei oder einen anderen vorgegebenen Wert hat. Ist dies nicht der Fall, folgt unmittelbar nach dem Verfahrensschritt 186 wieder der Verfahrensschritt 172. Das Verfahren befindet sich nun in einer Verfahrensschleife aus den Verfahrensschritten 172, 174, 176, 184 und 186. Diese Schleife wird nur verlassen, wenn eine Belegung des Endgerätes 14 auftritt, siehe Verfahrensschritt 178, oder wenn im Verfahrensschritt 186 festgestellt wird, dass die Merkvariable MV den Wert Zwei hat. Hat die Merkvariable MV den Wert Zwei, so folgt nach dem Verfahrensschritt 186 unmittelbar ein Verfahrensschritt 188.

Im Verfahrensschritt 188 wird der Status in der Telekommunikationsanlage 12 geändert. Dazu wird eine Statusänderungsmeldung vom Endgerät 14 zur Telekommunikationsanlage 12 gesendet. In einem folgenden Verfahrensschritt 190 wird das Verfahren beendet. Alternativ kann jedoch das Überwachungsprogramm erneut gestartet werden, siehe Verfahrensschritt 150.

Wird im Verfahrensschritt 170 festgestellt, dass der von der Telekommunikationsanlage 12 übermittelte Belegungszustand und der im Endgerät 14 vermerkte Belegungszustand gleich sind, so folgt unmittelbar nach dem Verfahrensschritt 170 ein Verfahrensschritt 192. Im Verfahrensschritt 192 wird ein Timer Z3 gestartet, der nach zwei Minuten abläuft, falls er nicht zwischenzeitlich unterbrochen wird.

In einem Verfahrensschritt 194 wartet das Überwachungsprogramm auf das Eintreffen eines Ereignisses. Wird das Endgerät 14 belegt, bevor der Timer Z3 abläuft, siehe Verfahrensschritt 196, so wird der Timer Z3 in einem Verfahrensschritt 198 angehalten. In einem folgenden Verfahrensschritt 200 wird die Belegung bearbeitet. Erst nach dem erneuten Freiwerden des Endgerätes 14 wird das Überwachungsprogramm wieder gestartet, siehe Verfahrensschritt 150.

Tritt dagegen im Verfahrensschritt 194 während des Wartens ein Ereignis auf, welches das Ablaufen des Timers Z3 mitteilt, siehe Verfahrensschritt 202, so folgt unmittelbar nach dem Verfahrensschritt 202 wieder der Verfahrensschritt 164. Das Verfahren befindet sich nun in einer Schleife aus den Verfahrensschritten 164 bis 170 sowie 192 bis 202. Das bedeutet, dass von der Langzeitüberwachung wieder zur Kurzzeitüberwachung übergegangen wird.

Die Schleife aus den Verfahrensschritten 164 bis 170 sowie 192 bis 202 wird entweder im Verfahrensschritt 170 verlassen, wenn Abweichungen des Belegungszustandes festgelegt werden, oder bei einer Belegung des Endgerätes 14, siehe Verfahrensschritte 178 bzw. 196.

Bei einem anderen Ausführungsbeispiel folgt nach dem Verfahrensschritt 186 wieder der Verfahrensschritt 164, falls die Merkvariable MV noch nicht den Wert Zwei erreicht hat. Es wird erreicht, dass die Telekommunikationsanlage 12 auch im Rahmen der Kurzzeitüberwachung mehrfach nach dem Belegungszustand des Endgerätes 14 gefragt wird.

Das an Hand der Figuren 3A und 3B erläuterte Programm lässt sich beispielsweise mit Hilfe des Betriebssystems WINDOWS NT der Firma Microsoft GmbH ausführen. Das Betriebssystem WINDOWS NT ermöglicht die Wartezustände in den Verfahrensschritten 154, 176 und 194. Anstelle von Timern Z1 bis Z3 lassen sich auch Zählprogramme verwenden, die parallel zu dem Überwachungsprogramm ablaufen. Eine solche parallele Ausführung von Programmen lässt sich ebenfalls mit dem Betriebssystem WINDOWS NT realisieren.

Die Figuren 4A bis 4D zeigen Szenarien zum Überwachen der Belegungszustände im Endgerät 14 und der Telekommunikationsanlage 12. Diese Maßnahmen erlauben es, auch bei einem Meldungsverlust zwischen Telekommunikationsanlage 12 und dem Endgerät 14 oder bei anderen Unregelmäßigkeiten die Belegungszustände in der Telekommunikationsanlage 12 und in dem Endgerät 14 synchron zu halten.

Figur 4A zeigt das periodische Überprüfen des Belegungszustandes von der Telekommunikationsanlage 12 aus. Nach einer Periode ml, z.B. nach 15 Minuten, siehe Rahmen 221, wird der Belegungszustand des Endgerätes 14 im Rahmen eines Audits mit Hilfe einer Statusabfragenachricht 220 abgefragt. Das Endgerät 14 liest seinen Belegungszustand und überträgt eine Statusmeldung 222 zur Telekommunikationsanlage 12. Liegt keine Abweichung zwischen den Belegungszuständen vor, so wird die Periode m1 erneut gestartet, siehe Rahmen 224. Wird dagegen eine Abweichung der Belegungszustände festgestellt, wird eine Periode m2 von beispielsweise drei Sekunden gestartet, siehe Rahmen 226. Nach dem Ablauf der Periode m2 sendet die Telekommunikationsanlage 12 erneut eine Statusabfragenachricht 228 an das Endgerät 14, siehe Rahmen 227. Das Endgerät 14 beantwortet die Statusabfragenachricht 228 mit einer Statusmeldung 230, in der der aktuelle Belegungszustand vermerkt ist. Die Telekommunikationsanlage 12 überprüft die Belegungszustände erneut. Liegt immer noch eine Abweichung vor, so wird die Periode m2 mehrere Male gestartet, bevor die Fehlerbehandlung durchgeführt wird. Bei einem anderen Ausführungsbeispiel wird gleich eine Fehlerbehandlung durchgeführt, wenn in der Telekommunikationsanlage 12 eine Abweichung der Belegungszustände festgestellt wird.

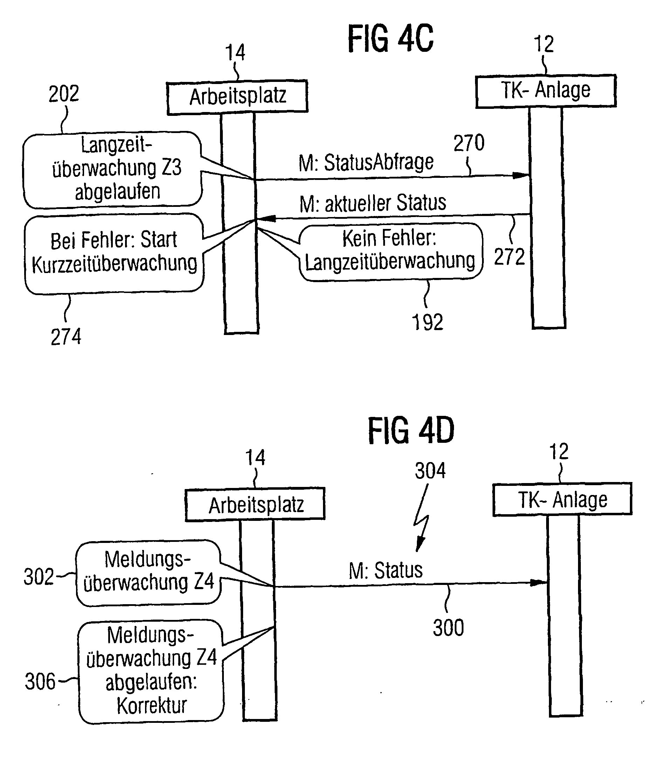

Die Figur 4B zeigt eine andere Darstellung der bereits an Hand der Figuren 3A und 3B erläuterten Verfahrensschritte. Nach dem Freiwerden des Endgerätes 14 wird das Überwachungsprogramm gestartet. Nach dem Ablaufen des Timers Z1 im Verfahrensschritt 162 wird eine Statusabfragenachricht 250 vom Endgerät 14 an die Telekommunikationsanlage 12 gesendet. Die Telekommunikationsanlage 12 antwortet mit einer Statusmeldung 252. Das Endgerät 14 vergleicht den von der Telekommunikationsanlage 12 übermittelten Belegungszustand mit dem im Endgerät 14 vermerkten Belegungszustand. Sind die Belegungszustände voneinander verschieden, so wird der Timer Z2 gestartet, siehe Verfahrensschritt 174. Sind die Belegungszustände dagegen gleich, so wird die Langzeitüberwachung gestartet, siehe Rahmen 254. Die bei der Langzeitüberwachung ausgeführten Verfahrensschritte sind zum Teil unten an Hand der Figur 4C dargestellt. Im Übrigen wird auf die Figuren 3A und 3B verwiesen.

Läuft die Periode Z2 ab, siehe Verfahrensschritt 184, so wird erneut eine Statusabfragenachricht 256 vom Endgerät 14 an die Telekommunikationsanlage 12 gesendet, siehe auch Verfahrensschritt 164 in Figur 3A. Die Telekommunikationsanlage 12 antwortet mit einer Statusmeldung 258, in welcher der in der Telekommunikationsanlage 12 vermerkte Belegungszustand des Endgerätes 14 vermerkt ist. Nach t-maligem Wiederholen der Periode Z2 erfolgt die Korrektur des Belegungszustandes im Endgerät 14, siehe Rahmen 260 bzw. Verfahrensschritt 188 in Figur 3B.

Die Figur 4C zeigt die Langzeitüberwachung vom Endgerät 14 aus. Läuft der Timer Z3 im Verfahrensschritt 202 ab, so wird vom Endgerät 14 eine Statusabfragenachricht 270 zur Telekommunikationsanlage 12 gesendet. Beim Bearbeiten der Statusabfragenachricht 270 liest die Telekommunikationsanlage 12 eine Speicherzelle, in der der Belegungszustand des Endgerätes 14 vermerkt ist. Das gelesene Datum wird anschließend in einer Statusmeldung 272 an das Endgerät 14 übertragen. In dem Endgerät 14 werden die Belegungszustände überprüft, siehe Verfahrensschritt 170 in Figur 3A. Bei einem Fehler wird die Merkvariable MV wieder auf den Wert Null gesetzt. Anschließend wird die Kurzzeitüberwachung gestartet, siehe Rahmen 274. Bei einem Ausführungsbeispiel wird dabei mit dem Verfahrensschritt 150 begonnen. Bei einem anderen Ausführungsbeispiel wird, so wie an Hand der Figuren 3A und 3B erläutert, mit dem Verfahrensschritt 172 begonnen. Sind die Belegungszustände gleich, so wird die Langzeitüberwachung im Verfahrensschritt 192 fortgesetzt.

Figur 4D zeigt ein weiteres Szenario zur Überwachung der Belegungszustände im Endgerät 14 und in der Telekommunikationsanlage 12. Um auch bei gesicherten Meldungen Abweichungen der Belegungszustände zu vermeiden, wird ein weiterer Timer Z4 eingesetzt. Nach dem Aussenden einer Statusmeldung 300 durch das Endgerät 14 wird im Endgerät 14 ein Timer Z4 gestartet, der nach kurzer Zeit abläuft, z.B. nach drei Sekunden. Das Starten des Timers Z4 wird durch einen Rahmen 302 verdeutlicht. Kommt es bei der Übertragung der Statusmeldung 300 zu einer Störung 304, so läuft der Timer Z4 ab, ohne dass zwischenzeitlich eine Bestätigungsmeldung von der Telekommunikationsanlage 12 empfangen worden ist, siehe Rahmen 306. Nach Ablauf des Timers Z4 im Endgerät 14 wird ein Verfahren zur Fehlerbehandlung gestartet. Beispielsweise wird die Übertragung der Statusmeldung wiederholt.

## Patentansprüche

1. Verfahren zum Abgleich der Belegungszustände zwischen einem Endgerät (14) und einer Vermittlungseinrichtung (12),
bei dem eine Vermittlungseinrichtung (12) ein Kommunikationsnetz und/oder ein Datenübertragungsnetz mit mindestens einem Endgerät (14) verbindet, dem Aufgaben von der Vermittlungseinrichtung (12) übergeben werden,
das Endgerät (14) auch Aufgaben bearbeitet, die von einer anderen Stelle als der Vermittlungseinrichtung (12) kommen,
das Endgerät (14) nur eine vorgegebene Anzahl von Aufgaben gleichzeitig erledigen kann,
beim Erreichen und beim Unterschreiten der vorgegebenen Anzahl eine Änderung des Belegungszustandes des Endgerätes (14) auftritt,
bei einer Änderung des Belegungszustandes Maßnahmen zum Vermerken der Änderung in der Vermittlungseinrichtung und/oder im Endgerät (14) eingeleitet werden,
und bei dem die fehlerfreie Ausführung der Maßnahmen automatisch überwacht wird,
wobei die Überwachung im Endgerät (14) ausgeführt wird.

2. Verfahren nach Anspruch 1, **dadurch gekennzeichnet, dass** die Überwachung abhängig von einem Unterschreiten der vorgegebenen Anzahl gestartet wird.

3. Verfahren nach Anspruch 1 oder 2, **dadurch gekennzeichnet, dass** die Vermittlungseinrichtung (12) unter einer Rufnummer ankommende Rufe an eines von mehreren Endgeräten (14, 16) verteilt oder dass die Vermittlungseinrichtung (12) unter einer Adresse ankommende Nachrichten an eines von mehreren Endgeräten (14, 16) verteilt.

4. Verfahren nach einem der vorhergehenden Ansprüche, **dadurch gekennzeichnet, dass** zu Beginn der Überwachung eine erste Zeitperiode (Z1) gestartet wird (152), die vorzugsweise im Sekundenbereich liegt,
dass bei einer Belegung (156) des Endgerätes (14) während der ersten Zeitperiode die Überwachung abgebrochen wird,
und dass bei Ablauf (162) der ersten Zeitperiode weitere Schritte im Rahmen der Überwachung ausgeführt werden, insbesondere eine Fehlerbehandlung.

5. Verfahren nach Anspruch 4, **dadurch gekennzeichnet, dass** nach Ablauf (162) der ersten Zeitperiode (Z1) der in der Vermittlungseinrichtung vermerkte Belegungszustand zum Endgerät (14) übermittelt wird (164),
dass der übermittelte Belegungszustand geprüft wird (170),
dass bei einer Abweichung des übermittelten Belegungszustandes vom Belegungszustand des Endgerätes (14) weitere Schritte im Rahmen der Überwachung ausgeführt werden,
und dass bei Übereinstimmung von übermitteltem Belegungszustand und Belegungszustand des Endgerätes (14) die Überwachung abgebrochen oder weitere Schritte im Rahmen der Überwachung ausgeführt werden.

6. Verfahren nach Anspruch 5, **dadurch gekennzeichnet, dass** bei einer Abweichung des übermittelten Belegungszustandes vom Belegungszustand des Endgerätes (14) eine Fehlerbehandlung gestartet wird,
oder dass mindestens eine zweite Zeitperiode (Z2) gestartet wird (174), die vorzugsweise im Sekundenbereich liegt,
dass bei einer Belegung (178) des Endgerätes (14) während der zweiten Zeitperiode (Z2) die Überwachung abgebrochen wird,
und dass bei Ablauf (184) der zweiten Zeitperiode (Z2) oder der letzten zweiten Zeitperiode (Z2) die Fehlerbehandlung ausgeführt wird.

7. Verfahren nach Anspruch 6, **dadurch gekennzeichnet, dass** nach dem Ablauf einer zweiten Zeitperiode (Z2), die nicht die letzte zweite Zeitperiode (Z2) ist, der in der Vermittlungseinrichtung (12) vermerkte Belegungszustand zum Endgerät übermittelt wird,
dass der übermittelte Belegungszustand geprüft wird,
und dass die auf das Prüfergebnis bezogenen Verfahrensschritte gemäß einem der Ansprüche 5 bis 7 ausgeführt werden.

8. Verfahren nach einem der Ansprüche 5 bis 7, **dadurch gekennzeichnet, dass** bei Übereinstimmung von übermitteltem Zustand und Belegungszustand des Endgerätes (14) eine dritte Zeitperiode (Z3) gestartet wird (192), die länger als die erste Zeitperiode (Z1) ist und vorzugsweise im Minutenbereich liegt,
dass bei einer Belegung (196) des Endgerätes (14) während der dritten Zeitperiode die Überwachung abgebrochen wird,
dass bei Ablauf (262) der dritten Zeitperiode der in der Vermittlungseinrichtung (12) vermerkte Belegungszustand zum Endgerät (14) übermittelt wird (174),
dass der übermittelte Belegungszustand geprüft wird (176),
und dass die auf das Prüfergebnis bezogenen Verfahrensschritte gemäß einem der Patentansprüche 5 bis 8 ausgeführt werden.

9. Verfahren nach einem der vorhergehenden Ansprüche, **dadurch gekennzeichnet, dass** zur Fehlerbehandlung die Maßnahmen zum Vermerken der Änderung in der Vermittlungseinrichtung (12) wiederholt werden,
oder dass der Belegungszustand des Endgerätes (14) dem in der Vermittlungseinrichtung (12) vermerkten Belegungszustand angeglichen wird.

10. Endgerät (14), insbesondere Datenverarbeitungsanlage,
mit einem Anschluss zum Anschließen einer Vermittlungseinrichtung (12), die das Endgerät (14) mit einem Kommunikationsnetz und/oder einem Datenübertragungsnetz verbindet,
mit einer Aufgabenbearbeitungseinheit, derart ausgestaltet, dass diese von der Vermittlungseinrichtung übergebene Aufgaben und Aufgaben bearbeitet, die von einer anderen Stelle als der Vermittlungseinrichtung kommen,
wobei die Aufgabenbearbeitungseinheit nur eine vorgegebene Anzahl von Aufgaben gleichzeitig erledigen kann,
und wobei beim Erreichen und beim Unterschreiten der vorgegebenen Anzahl eine Änderung des Belegungszustandes des Endgerätes (14) auftritt,
und mit einer Überwachungseinheit, derart ausgestaltet, dass diese Maßnahmen zum Vermerken der Änderungen automatisch überwacht.

11. Endgerät nach Anspruch 10, **dadurch gekennzeichnet, dass** die Überwachung abhängig von einem Unterschreiten der vorgegebenen Anzahl gestartet wird.

12. Endgerät nach Anspruch 10 oder 11, **dadurch gekennzeichnet, dass** es so aufgebaut ist, dass bei seinem Betrieb ein Verfahren nach einem der Ansprüche 1 bis 9 ausgeführt wird.

13. Überwachungsprogramm mit einer Befehlsfolge, bei deren Ausführung durch einen Prozessor die auf die Überwachung bezogenen Verfahrensschritte gemäß einem der Ansprüche 1 bis 9 ausgeführt werden.

## Claims

1. Method for adjusting occupancy states between a terminal (14) and a switching facility (12),
in which a switching facility (12) connects a communication network and/or a data transmission network to at least one terminal (14), to which tasks are transferred from the switching facility (12),
the terminal (14) also processes tasks which arrive from a location other than the switching facility (12),
the terminal (14) can only deal with a predetermined number of tasks at the same time,
a change in the occupancy state of the terminal (14) occurs when the number is equal to or less than the predetermined number,
measures for noting the change in the switching facility and/or in the terminal (14) are initiated in the event of a change in the occupancy state,
and in which the error-free implementation of measures is monitored automatically,
monitoring being carried out in the terminal (14).

2. Method according to claim 1, **characterised in that** monitoring is started as a function of a number less than the predetermined number.

3. Method according to claim 1 or 2, **characterised in that** the switching facility (12) distributes calls coming in to one call number to one of several terminals (14, 16), or that the switching facility (12) distributes messages coming in to one address to one of several terminals (14, 16).

4. Method according to one of the preceding claims, **characterised in that** a first time period (Z1) is started (152) at the beginning of monitoring and is preferably seconds long,
that monitoring is interrupted in the event of occupancy (156) of the terminal (14) during the first time period
and that further steps are implemented in the context of monitoring on expiry (162) of the first time period, in particular an error handling process.

5. Method according to claim 4, **characterised in that**, after expiry (162) of the first time period (Z1), the occupancy state noted in the switching facility is transmitted (164) to the terminal (14)
that the transmitted occupancy state is verified (170)
that in the event of a difference between the transmitted occupancy state and the occupancy state of the terminal (14), further steps are implemented in the context of monitoring,
and that in the event of a correspondence between the transmitted occupancy state and the occupancy state of the terminal (14), monitoring is interrupted or further steps are implemented in the context of monitoring.

6. Method according to claim 5, **characterised in that** an error handling process is started in the event of a difference between the transmitted occupancy state and the occupancy state of the terminal (14),
or that at least one second time period (Z2) is started (174) which is preferably seconds long.
that in the event of occupancy (178) of the terminal (14) during the second time period (Z2), monitoring is interrupted,
and that the error handling process is implemented on expiry (184) of the second time period (Z2) or the last second time period (Z2).

7. Method according to claim 6, **characterised in that** after expiry of a second time period (Z2), which is not the last second time period (Z2), the occupancy state noted in the switching facility (12) is transmitted to the terminal,
that the transmitted occupancy state is verified,
and that the method steps relating to the verification result are implemented according to one of claims 5 to 7.

8. Method according to one of claims 5 to 7, **characterised in that** in the event of a correspondence between the transmitted state and the occupancy state of the terminal (14), a third time period (Z3) is started (192), which is longer than the first time period (Z1) and is preferably minutes long,
that in the event of occupancy (196) of the terminal (14) during the third time period, monitoring is interrupted,
that on expiry (262) of the third time period, the occupancy state noted in the switching facility (12) is transmitted (174) to the terminal (14),
that the transmitted occupancy state is verified (176) and that the method steps relating to the verification result are implemented according to one of claims 5 to 8.

9. Method according to one of the preceding claims, **characterised in that** the measures for noting the change in the switching facility (12) are repeated for error handling purposes,
or that the occupancy state of the terminal (14) is adjusted to the occupancy state noted in the switching facility (12).

10. Terminal (14), in particular a data processing system
with a connection for connecting a switching facility (12), which connects the terminal (14) to a communication network and/or a data transmission network,
with a task processing unit configured such that it processes tasks transferred from the switching facility and tasks, which come from a location other than the switching facility,
whereby the task processing unit can only deal with a predetermined number of tasks at the same time,
and whereby a change in the occupancy state of the terminal (14) takes place when the number is equal to or less than the predetermined number,
and with a monitoring unit configured such that it automatically monitors measures for noting the changes.

11. Terminal according to claim 10, **characterised in that** monitoring is started as a function of a number less than the predetermined number.

12. Terminal according to claim 10 or 11, **characterised in that** it is constructed such that during its operation, a method according to one of claims 1 to 9 is implemented.

13. Monitoring program with a sequence of instructions, during the execution of which by a processor the method steps relating to monitoring are implemented according to one of claims 1 to 9.

## Revendications

1. Procédé pour équilibrer les états d'occupation entre un terminal (14) et un central (12)
dans lequel un central (12) relie un réseau de communication et/ou un réseau de transmission de données avec au moins un terminal (14) auquel des tâches sont confiées par le central
(12),
le terminal (14) traite également des tâches qui proviennent d'un autre endroit que le central (12),
le terminal (14) ne peut traiter simultanément qu'un nombre prédéfini de tâches,
à l'atteinte et lors du passage en-dessous du nombre prédéfini, une modification de l'état d'occupation du terminal (14) se présente,
lors d'une modification de l'état d'occupation, des mesures sont introduites pour notifier la modification dans le central et/ou dans le terminal (14),
et dans lequel la réalisation sans défaut des mesures est automatiquement surveillée,
la surveillance étant réalisée dans le terminal (14).

2. Procédé selon la revendication 1, **caractérisé en ce que** la surveillance est lancée en fonction d'un passage en-dessous du nombre prédéfini.

3. Procédé selon la revendication 1 ou 2, **caractérisé en ce que** le central (12) distribue des appels entrant sous un numéro d'appel à l'un d'entre plusieurs terminaux (14, 16), ou **en ce que** le central (12) distribue des messages entrant sous une adresse à l'un d'entre plusieurs terminaux (14, 16).

4. Procédé selon l'une quelconque des revendications précédentes, **caractérisé en ce qu'**au début de la surveillance, une première période (Z1) qui se situe de préférence dans la plage des secondes est lancée (152),
**en ce que** dans le cas d'une occupation (156) du terminal (14) pendant la première période, la surveillance est interrompue,
et **en ce qu'**après écoulement (162) de la première période, d'autres étapes, notamment un traitement des défauts, sont réalisées dans le cadre de la surveillance.

5. Procédé selon la revendication 4, **caractérisé en ce qu'**après écoulement (162) de la première période (Z1), l'état d'occupation notifié dans le central est transmis (164) au terminal (14),
**en ce que** l'état d'occupation transmis est vérifié (170),
**en ce que** dans le cas d'un écart entre l'état d'occupation transmis et l'état d'occupation du terminal (14), d'autres étapes sont réalisées dans le cadre de la surveillance,
et **en ce que** si l'état d'occupation transmis et l'état d'occupation du terminal (14) correspondent, la surveillance est interrompue ou d'autres étapes sont réalisées dans le cadre de la surveillance.

6. Procédé selon la revendication 5, **caractérisé en ce que** dans le cas d'un écart entre l'état d'occupation transmis et l'état d'occupation du terminal (14), un traitement des défauts est lancé,
ou **en ce qu'**au moins une seconde période (Z2), qui se situe de préférence dans la plage des secondes, est lancée (174),
**en ce que** dans le cas d'une occupation (178) du terminal (14) pendant la seconde période (Z2), la surveillance est interrompue,
et **en ce qu'**après écoulement (184) de la deuxième période (Z2) ou de la dernière seconde période (Z2), le traitement des défauts est réalisé.

7. Procédé selon la revendication 6, **caractérisé en ce qu'**après écoulement d'une deuxième période (Z2), qui n'est pas la dernière seconde période (Z2), l'état d'occupation notifié dans le central (12) est transmis au terminal,
**en ce que** l'état d'occupation transmis est vérifié,
et **en ce que** les étapes de procédés se rapportant au résultat de la vérification sont réalisées selon l'une quelconque des revendications 5 à 7.

8. Procédé selon l'une quelconque des revendications 5 à 7, **caractérisé en ce que** si l'état transmis correspond à l'état d'occupation du terminal (14), une troisième période (Z3), qui est plus longue que la première période (Z1) et qui se situe de préférence dans la plage des minutes, est lancée (192),
**en ce qu'**en cas d'occupation (196) du terminal (14) au cours de la troisième période, la surveillance est interrompue,
**en ce qu'**après écoulement (262) de la troisième période, l'état d'occupation notifié dans le central (12) est transmis (174) au terminal (14),
**en ce que** l'état d'occupation transmis est vérifié (176),
et **en ce que** les étapes de procédé se rapportant au résultat de la vérification sont réalisées selon l'une quelconque des revendications 5 à 8.

9. Procédé selon l'une quelconque des revendications précédentes, **caractérisé en ce que** pour le traitement des défauts, les mesures de notification de la modification dans le central (12) sont répétées,
ou **en ce que** l'état d'occupation du terminal (14) est équilibré avec l'état d'occupation notifié dans le central (12).

10. Terminal (14), notamment système de traitement de données,
avec un branchement pour raccorder un central (12) qui relie le terminal (14) à un réseau de communication et/ou à un réseau de transmission de données,
avec une unité de traitement des tâches, équipée de façon telle, qu'elle traite des tâches transmises par le central et des tâches qui proviennent d'un autre endroit que le central,
l'unité de traitement des tâches ne pouvant traiter qu'un nombre prédéfini de tâches,
et à l'atteinte ou en cas de passage en-dessous du nombre prédéfini, une modification de l'état d'occupation du terminal (14) se présente,
et avec une unité de surveillance, équipée de façon telle qu'elle surveille automatiquement des mesures de notification des modifications.

11. Terminal selon la revendication 10, **caractérisé en ce que** la surveillance est lancée en fonction d'un passage en-dessous du nombre prédéfini.

12. Terminal selon la revendication 10 ou 11, **caractérisé en ce qu'**il est constitué de façon telle que pendant son exploitation, un procédé selon l'une quelconque des revendications 1 à 9 est réalisé.

13. Programme de surveillance avec une séquence d'ordres, lors de l'exécution desquels par un processeur les étapes de procédé se rapportant à la surveillance selon l'une quelconque des revendications 1 à 9 sont réalisées.
